Europäisches Patentamt

European Patent Office

Office européen des brevets

(11) Numéro de publication: **0 078 759**
A2

# (12) DEMANDE DE BREVET EUROPEEN

(21) Numéro de dépôt: 82450017.7

(51) Int. Cl.³: **F 02 B 43/08**

(22) Date de dépôt: 03.11.82

(30) Priorité: 03.11.81 FR 8120771

(71) Demandeur: Zundel, Jean Claude, Bel Air, F-40420 Vert Labrit (FR)

(43) Date de publication de la demande: 11.05.83
Bulletin 83/19

(72) Inventeur: Zundel, Jean Claude, Bel Air, F-40420 Vert Labrit (FR)

(84) Etats contractants désignés: AT CH DE FR GB IT LI SE

(54) Utilisation de gaz de charbon de bois, de bois issus de gazogène à chargement automatique couplé à une alimentation simultanée ou séparée en hydrocarbures liquides ou gazeux d'origine fossile ou alternative dans les moteurs à combustion interne.

(57) Alimentation en carburant des Moteurs à combustion interne par l'utilisation du gazogène de charbon de bois et/ou à bois à chargement automatique couplé à une alimentation aux hydrocarbures gazeux ou liquides type Méthane, G.P.L., essences, alcools, gazoles etc.,,, La régulation automatique entre les deux systèmes est effectuée par une vanne branchée sur l'arrivée d'air des moteurs et pilotée par l'électronique.

EP 0 078 759 A2

Gazogènes à charbon de bois et/ ou à bois à chargement automatique combiné avec une alimentation avec des carburants en état gazeux, avec de l'essence ou du super ou encore suivant un principe Diesel pour assurer le processus de démarrage ou de complément.

## Etat de la technique actuelle

L'utilisation des énergies alternatives de tous types pour alimenter les moteurs à combustion interne de tous types par exemple : avec un générateur à charbon de bois et/ ou à bois, et ou à charbon, et/ ou à tourbe-lignite et/ ou à huile-charbon et/ ou avec tout autre combustible générateur d'énergie alternative, oblige de respecter un temps de démarrage pour le générateur et pendant ce temps il est nécessaire d'apporter une énergie extérieure afin de mettre en route le ventilateur qui assure l'apport d'air et de permettre le maintien de la combustion dans les chambres de combustion jusqu'à ce que le gazogène soit d'une part autonome et produise d'autre part de lui-même les gaz combustibles tels que $H_2$ (Hydrogène) CO (gaz carbonique) et les liaisons hydrocarbonées de tous types qui assureront ensemble l'alimentation intégrale en carburant des chambres de combustion des moteurs à combustion interne de tous types.

## Insuffisance de l'état actuel de la technique

En ce qui concerne la mise en route des machines à combustion interne fonctionnant avec des sources alternatives, le fait marquant en est l'incapacité de démarrage instantané comme c'est le fait avec tous les moteurs à combustion 2 temps, 4 temps, ou Diesel qui nous entourent.

Le but de l'invention doit être de construire un pilotage automatique d'une installation tandem permettant une alimentation alternée ou simultanée mixte de sorte que toutes les machines transformatrices d'énergie à combustion interne puissent être démarrées par les carburants traditionnels avec l'avantage lié à ce système, associé au prix de revient des énergies alternatives.

## Solutions apportées par l'invention

Les moteurs à combustion interne construits à ce jour du type à allumage commandé ou de cycle Diesel prennent en compte dès le démarrage la fourniture en courant électrique qui permet la mise en route et l'alimentation du système d'allumage des générateurs

0078759

de carburants alternatifs de tous types jusqu'à ce que ceux-ci puissent prendre en compte par eux-mêmes, grâce au gaz produit, des besoins en énergie sur toute la plage d'utilisation des moteurs à combustion interne. La mise en service des moteurs et l'insertion progressive du carburant d'origine alternative dans les pipes d'admission est assurée par un montage à pilotage automatique de type électronique.

Caractérisée par l'installation gaz pauvre / gaz à base d'hydrocarbures suivant l'exposé de la revendication n° 1 en ce que l'alimentation en gaz pauvre se fera pour le moteur à combustion interne à 100% dès lors que le gazogène à charbon de bois ou à bois aura atteint sa température normale de rendement et sa capacité.

Ce gazogène alimentera alors en totalité en carburant le moteur à combustion interne et l'alimentation en gaz méthane ou en gaz de pétrole liquéfié restera interrompue tant que le charbon de bois ou le bois pourra prendre en charge à 100% les besoins du moteur en carburant, alors que la partie du système assurant la fourniture en gaz pourra répondre jusqu'à 100% lorsque la charge du gazogène aura été consumée complètement.

Caractérisée par un gazogène au charbon de bois et/ ou au bois qui est défini par les revendications 1 et 2, alors que le remplacement de la charge consumée de charbon de bois ou de bois qui est apportée dans une chambre appropriée sous la forme de paquets préconditionnés, de manière totalement automatique de sorte qu'après l'enfournement de la nouvelle charge, le gazogène puisse automatiquement être remis en ordre de marche.

Des gazogènes à charbon de bois et/ ou à bois suivant les revendications 1 à 3, remarquable en ce que le système d'alimentation à l'essence ordinaire ou super ainsi que des systèmes fonctionnant aux essences de tous types ou des systèmes Diesel assistés d'un allumage commandé, de sorte que par un de ces systèmes le moteur peut être mis en route ou entretenu pendant les temps de défaillance du gazogène.

Ce type d'installation permettra d'utiliser en milieu rural tous les déchets de la Biomasse ainsi que les gisements d'énergie fossile actuellement non rentables permettant à terme de redonner vie, grâce à une nouvelle autarcie énergétique, aux trop nombreux cantons français condamnés par la centralisation énergétique à une mort certaine. Seul, l'attrait d'une énergie bon marché pourra donner un nouvel attrait pour l'Artisanat et la petite industrie

à ces cantons ruraux défavorisés.

D'autre part, la production agricole consomme actuellement environ 3% de notre importation pétrolière. Globalement, 90% de l'énergie utilisée dans ce secteur est à base de pétrole, il est indispensable d'apporter des solutions de remplacement qui permettant d'éviter en cas de crise une diminution catastrophique des exploitations. Cette énergie utilisée sur la ferme doit être considérée comme une autre récolte.

Le domaine de la recherche est bien l'adaptation aux moteurs existants d'une alimentation polycarburants basée sur les ressources énergétiques en milieu rural, ce genre de système pouvant grâce à une exploitation industrielle, devenir une ressource nouvelle pour l'exportation vers les pays du Tiers-Monde qui en ont le plus grand besoin. Cette recherche pourra être étendue aux algues marines et aux dépôts végétaux marins dont la valeur calorifique de la matière sèche va de 6000 à 11000 Cal/Kg.

## REVENDICATIONS

1. Caractérisée par un gazogène à charbon de bois et/ ou au bois mis en service en tandem avec une installation fonctionnant au Biogaz, au méthane ou au gaz de pétrole liquéfié qui assure le démarrage immédiat d'un moteur à combustion interne muni d'un équipement spécial, alors que dans la phase de démarrage qui est celle du fonctionnement à l'un des gaz précités, le gazogène au charbon de bois et/ ou au bois est activé par un ventilateur automatique et ainsi rendu après un certain temps opérationnel. Dès que le générateur est opérationnel, les gaz combustibles sont alors dirigés de manière automatique par un système vers les pipes d'admission.

2. Caractérisée par l'installation gaz pauvre / gaz à base d'hydrocarbures suivant l'exposé de la revendication n° 1 en ce que l'alimentation en gaz pauvre se fera pour le moteur à combustion interne à 100% dès lors que le gazogène à charbon de bois ou à bois aura atteint sa température normale de rendement et sa capacité.

Ce gazogène alimentera alors en totalité en carburant le moteur à combustion interne et l'alimentation en gaz méthane ou en gaz de pétrole liquéfié restera interrompue tant que le charbon de bois ou le bois pourra prendre en charge à 100% les besoins du moteur en carburant, alors que la partie du système assurant la fourniture en gaz pourra répondre jusqu'à 100% lorsque la charge du gazogène aura été consumée complètement.

3. Caractérisée par un gazogène au charbon de bois et/ ou au bois qui est défini par les revendications 1 et 2, alors que le remplacement de la charge consumée de charbon de bois ou de bois qui est apportée dans une chambre appropriée sous la forme de paquets préconditionnés de manière totalement automatique de sorte qu'après l'enfournement de la nouvelle charge, le gazogène puisse automatiquement être remis en ordre de marche.

4. Des gazogènes à charbon de bois et/ ou à bois suivant les revendications 1 à 3, remarquable en ce que le système d'alimentation à l'essence ordinaire ou super ainsi que des systèmes fonctionnant aux essences de tous types ou des systèmes Diesel assistés d'un allumage commandé, de sorte que par un de ces systèmes le moteur peut être mis en route ou entretenu pendant les temps de défaillance du gazogène.

BAD ORIGINAL